# EUROPEAN PATENT APPLICATION

(11) **EP 4 598 122 A1**
(43) Date of publication of application: **06.08.2025**
(21) Application number: 25154842.6
(22) Date of filing: 30.01.2025
(51) Int. Cl.: H04W 36/00

(54) **MANAGEMENT OF HANDOVER**

(30) Priority: 02.02.2024 FI 20245102
(71) Applicant: Telia Company AB, 169 94 Solna (SE)
(72) Inventor: JALKANEN, Tero, 04300 TUUSULA (FI); SARAJISTO, Tomi, 00790 HELSINKI (FI)
(74) Representative: Berggren Oy

(57) **Abstract**

A method for triggering a handover of a mobile terminal (150, 150A, 150B) from a first network (MNO A) to a second network (MNO B) is provided, the method comprises: accessing (210) data descriptive of a behavior of mobile terminals (150, 150A, 150B) served by the first mobile communication network (MNO A); detecting (220) a mobile terminal (150, 150A, 150B) whose behavior is indicative of an expected need of a handover; generating (230) a control signal to a control entity (126) of the first mobile communication network (MNO A) to request triggering of a handover of the mobile terminal (150, 150A, 150B) to the second mobile communication network (MNO B). A computing system (122), a computer program and a communication system are also provided to.

## Description

### TECHNICAL FIELD

The invention concerns in general the technical field of telecommunications. More particularly, the invention concerns a management of a handover of a mobile terminal.

### BACKGROUND

Management of a handover of a mobile terminal in mobile communication networks is a crucial task in terms of a service quality. In other words, since the mobile terminals are geographically moving in areas the mobile telecommunication networks shall be capable of providing service in spite of a change of location. In practice this means that the mobile communication network shall be able to manage the service provision so that it is aware of the mobile terminals that may require a transfer of service provision from one base station to another and trigger the transfer at an instant of time. The task is manageable in a situation where the transfer between the base stations (cf. cells) occur inside the serving mobile communication network but becomes more challenging if the mobile terminal is to be transferred from a first mobile communication network to be served by a second mobile communication network.

In accordance with known solutions a so-called international mobile subscriber identity (IMSI) whitelist is used to ensure that the mobile terminal is handed over to a network that is authorized to provide service to the subscriber. The IMSI whitelist is a list of IMSI numbers that are allowed to access a particular network. The handover process begins when the mobile terminal detects that it is approaching an edge of its current cell. The mobile terminal then sends a handover request to the serving mobile communication network. The serving mobile communication network checks the IMSI whitelist to see if the mobile terminal is authorized to access the new mobile communication network. If the mobile terminal is authorized, the serving mobile communication network sends a handover command to the new mobile communication network. The new mobile communication network then sends a handover message to the mobile terminal. The mobile terminal then establishes a connection with the new mobile communication network.

The application of the IMSI whitelist for the handover is operable as such but a management of the IMSI whitelist requires a lot of manual work to specify users allowed to be handed over between the mobile communication networks. Hence, the solution does not actually scale in view of a management of a number of mobile terminals, i.e. the subscribers. Moreover, a radio network planning also requires manual effort to safeguard the service quality of the mobile terminals also in terms of guaranteeing that the handover succeeds. However, the manual radio network planning does not solve challenges in overlapping mobile communication networks.

As a general example of a challenging handover situation one may mention the one in which the mobile terminal arrives at a border area of two countries and, thus, assumedly there are different operator networks at each side of the border. Technically speaking such a situation requires only some configuration to extend the regular Inter-MME handover to take place between the different operator networks in the countries and in addition some radio network neighboring cell reconfiguration is required to extend the allowed radio coverage across the country border. However, due to business and/or charging related reasons the (home) operator should be able to allow/disallow the handover.

Therefore, there are possibilities to introduce novel approaches in the field of a handover management that overcome at least some of the above mentioned drawbacks in the prior solutions.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a computing system, a computer program and a communication system for triggering a handover of a mobile terminal.

The objects of the invention are reached by a method, a computing system, a computer program and a communication system as defined by the respective independent claims.

According to a first aspect, a method for triggering a handover of a mobile terminal from a first mobile communication network to a second mobile communication network is provided, the first mobile communication network is providing a connection to the mobile terminal, the method, performed by a computing system, comprises:
accessing data descriptive of a behavior of a number of mobile terminals served by the first mobile communication network,
detecting a mobile terminal among the number of mobile terminals whose behavior, based on an analysis of the data descriptive of the behavior of the number of mobile terminals, is indicative of an expected need of a handover,
generating a control signal to a control entity of the first mobile communication network to request triggering of a handover of the mobile terminal whose behavior is detected to be indicative of the expected need of a handover from the first mobile communication network to the second mobile communication network.

The method may further comprise:
generating a control signal further comprising data causing the control entity of the first mobile communication network to inform an entity in a radio access network of the first mobile communication network on at least one entity in a radio access network of the second mobile communication network.

The method may further comprise:
generating, in response to the detection that the behavior of the mobile terminal is indicative of an expected need of a handover, a control signal to the mobile terminal to control at least one service executed by the mobile terminal in a context of the handover.

For example, the detection may be performed with respect to the number of mobile terminals determined to reside in a predefined evaluation area.

The detection may be performed by comparing the data descriptive of the behavior of the mobile terminal to a history data descriptive of the behavior of the mobile terminal. Alternatively, the detection may be performed by inputting the data descriptive of the behavior of the mobile terminal to a machine-learning model trained to detect the expected need of the handover.

The step of accessing the data descriptive of the behavior of the mobile terminal served by the first mobile communication network may be initiated in response to a detection that the handover is required based on a radio network quality measurement.

According to a second aspect, a computing system for triggering a handover of a mobile terminal from a first mobile communication network to a second mobile communication network is provided, the first mobile communication network is providing a connection to the mobile terminal, the computing system is configured to:
access data descriptive of a behavior of a number of mobile terminals served by the first mobile communication network,
detect a mobile terminal among the number of mobile terminals whose behavior, based on an analysis of the data descriptive of the behavior of the number of mobile terminals, is indicative of an expected need of a handover,
generate a control signal to a control entity of the first mobile communication network to request triggering of a handover of the mobile terminal whose behavior is detected to be indicative of the expected need of a handover from the first mobile communication network to the second mobile communication network.

The computing system may further be configured to:
generate a control signal further comprising data causing the control entity of the first mobile communication network to inform an entity in a radio access network of the first mobile communication network on at least one entity in a radio access network of the second mobile communication network.

The computing system may further be configured to:
generate, in response to the detection that the behavior of the mobile terminal is indicative of an expected need of a handover, a control signal to the mobile terminal to control at least one service executed by the mobile terminal in a context of the handover.

The computing system may be configured to perform the detection with respect to the number of mobile terminals determined to reside in a predefined evaluation area. Alternatively, the computing system may be configured to perform the detection by comparing the data descriptive of the behavior of the mobile terminal to a history data descriptive of the behavior of the mobile terminal.

The computing system may be configured to perform the detection by inputting the data descriptive of the behavior of the mobile terminal to a machine-learning model trained to detect the expected need of the handover.

Moreover, the computing system may be configured to initiate the step of accessing the data descriptive of the behavior of the mobile terminal served by the first mobile communication network in response to a detection that the handover is required based on a radio network quality measurement.

According to a third aspect, a computer program comprising instructions to cause the computing system according to the second aspect to execute the steps of the method according to the first aspect.

According to a fourth aspect, a communication system is provided, the communication system comprising:
a first mobile communication network,
a second mobile communication network,
a mobile terminal, and
a computing system according to the second aspect.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication system according to an example.
Figure 2 illustrates schematically a method according to an example.
Figure 3 illustrates schematically a further aspect in relation to a method according to an example.
Figure 4 illustrates schematically a flow chart according to an example.
Figure 5 illustrates schematically an apparatus implementing a computing system according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

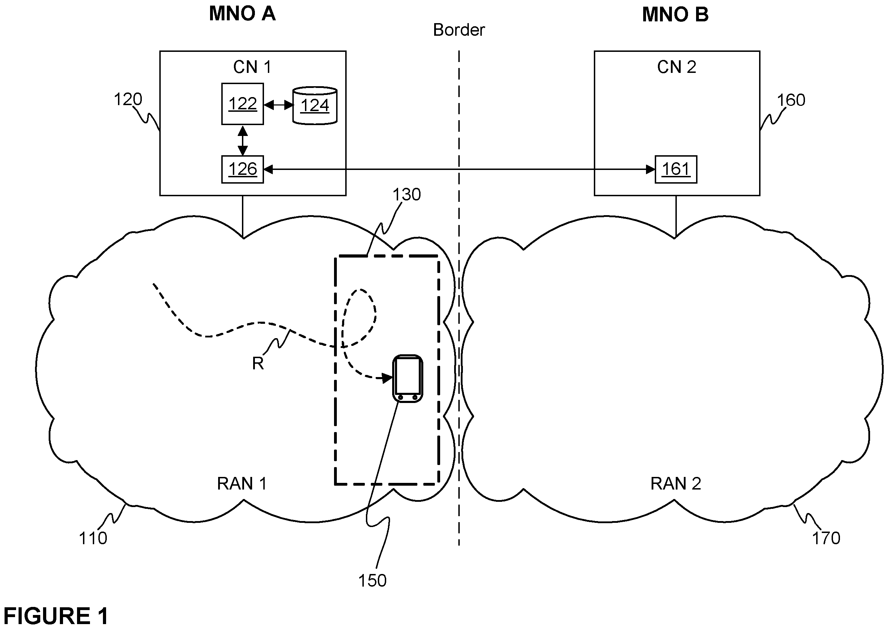

Figure 1 illustrates schematically a non-limiting example of a communication system into which the present invention may be implemented to. The communication system comprises a plurality of mobile communication networks referred with MNO A and MNO B in Figure 1. The MNO A and MNO B refer to mobile communication networks operated by different telecom operators, but the networks may also be operated by the same telecom operator. In any case, the networks are implemented so that a service of a mobile terminal 150 needs to be transferred from the first network MNO A to the second network MNO B. The need for the transfer may originate from a definition of service areas of the first mobile communication network MNO A and the second mobile communication network MNO B wherein an imaginary border line separates the respective service areas (cf. the dashed line denoted with word 'border' in Figure 1). The imaginary border line may e.g. refer to a geographical border (cf. e.g. to a border between two countries) or to a logical border (cf. e.g. to a border between a mobile communication network and a private communication network in a certain area (e.g. in a factory)). For sake of clarity, it is worthwhile to mention that even if it is shown that there is a border between the first mobile communication network MNO A and the second mobile communication network MNO B, it shall be understood that the service areas of the mobile communication networks overlap to an extent that the handover of the mobile terminal 150 between the mobile communication networks may be executed.

Both mobile communication networks MNO A and MNO B may comprise their own core networks 120, 160 as well as their own radio access networks 110, 170. The core network 120, 160 of the mobile communication network and the radio access network of the same mobile communication network are communicatively connected so that one or more entities may operate and control entities, such as the base stations, in the radio access network in order to provide communication service to a number of mobile terminals 150. The core networks 120, 160 of the mobile communication networks MNO A, MNO B may also be communicatively connected so that they may share data, such as subscriber related data, with each other. The communication between the core networks 120, 160 may e.g. be executed on a signaling plane.

Next, a method for triggering a handover of a mobile terminal 150 from a first mobile communication network MNO A to a second mobile communication network MNO B is described in the environment according to Figure 1. At least some aspects of the invention are described in a situation where the mobile terminal 150 is served by the first mobile communication network MNO A and it is evaluated if a handover to the second mobile communication network MNO B shall be initiated for serving the mobile terminal 150. The evaluation, or triggering, of the handover according to the present invention may be dependent on a standardized handover procedure as is described in the forthcoming description. The method may be executed by a computing system 122 arranged with an access to data maintained by one or more entities of a core network CN 1 of the first mobile communication network MNO A wherein the one or more entities may refer to an entity managing location data of at least the mobile terminal 150 in question. Furthermore, in accordance with an embodiment the computing system 122 may be provided with an access to an entity arranged to maintain history data with respect to the mobile terminal 150 in question, wherein the history data may be descriptive of a behavior of the mobile terminal 150 over a predefined period of time, such as over an existence of a subscription arranged in the mobile terminal 150 or a shorter period of time under interest. The behavior of the mobile terminal 150 may at least refer to position data of the mobile terminal 150, but also further data, such as data descriptive of handovers of the mobile terminal 150 e.g. associated with respect to the position data. The data may be raw data or processed in some predefined manner, such as by processing the raw data to generate statistical data descriptive of the behavior of the mobile terminal 150. The position data and any data generated therefrom shall be understood in a broad manner, e.g. to comprise position coordinates, velocity information, a movement direction possibly associated with timing information (cf. e.g. time stamps). According to another embodiment a digital model may be generated, on a basis of the history data, descriptive of the behavior of the mobile terminal 150 in question. The digital model may refer to a machine-learning model that is trained to perform a classification of the behavior of the mobile terminal 150 in order to predict operations at least one mobile communication network MNO A, MNO B shall take to serve the mobile terminal 150 in question. More specifically, the machine-learning model may be trained to predict through classifying the data descriptive of the current behavior of the mobile terminal 150 if a handover process shall be initiated with respect to the mobile terminal 150 or not. The training of the machine-learning model may be performed with the history data descriptive of the earlier behavior of the mobile terminal 150 both ending up to handover process and not ending up to the handover process. In other words, the training may be performed with the position data, e.g. by setting repetitive patterns on consecutive positions of the mobile terminal 150 leading to the handover process and not leading to the handover process so as to make the machine-learning model capable of detecting, based on the position data of the mobile terminal 150 input to the trained machine-learning model, if the handover process for the mobile terminal 150 is to be initiated or not. For sake of completeness it is worthwhile to mention that the training may e.g. be performed on a subscriber basis, i.e. for each subscriber, and thus for each mobile terminal 150, it is trained a dedicated machine-learning model for evaluating the behavior of the mobile terminal 150 in question. Alternatively, the training of the machine-learning model may be performed with data descriptive of behaviors of a plurality of mobile terminals 150 so as to generate the model as described.

An example of the entity arranged to store data descriptive of the behavior of the mobile terminal 150 is schematically illustrated in Figure 1 with a reference 124. The entity may e.g. be a data storage arranged to store data in a database. The data structure may e.g. be established so that the gathered data, and/or any derivation of it, is stored in a subscriber-based manner e.g. by using an applicable subscriber identifier, such as an IMSI, representing the mobile terminal 150 in question in the manner as is described herein. In case the machine-learning model is generated in the manner as described, the machine-learning model may be executed by the computing system 122 into which the trained model is transferred in a known manner. The data storage 124 may also be involved in storing data relating to the machine-learning model if needed. In the illustration of the system in Figure 1 it is shown that the computing system 122 and the data storage 124 are core network entities, but it may also be arranged that at least one of them reside external to the core network CN 1, such as residing in a data network like Internet, and the respective entity, or entities, are communicatively connected with the core network CN 1 of the first mobile communication network MNO A in a secure manner.

As mentioned, at least one aim of the method in accordance with the present invention is to manage triggering of a handover of a mobile terminal 150 from a first mobile communication network MNO A to a second mobile communication network MNO B in a situation wherein the first mobile communication network MNO A is already providing a connection to the mobile terminal 150 in question. The connection in the context of the present invention shall be at least to cover a connection established by the mobile terminal 150, network component or service provider. In alternative implementations the connection may also be a connection which is being established with a request initiated by the mobile terminal or any network component, or a session which is used for establishment for a connection as a result. A non-limiting example of the connection may be an active service connection, such as an active voice call connection, wherein the handover management is an especially important issue.

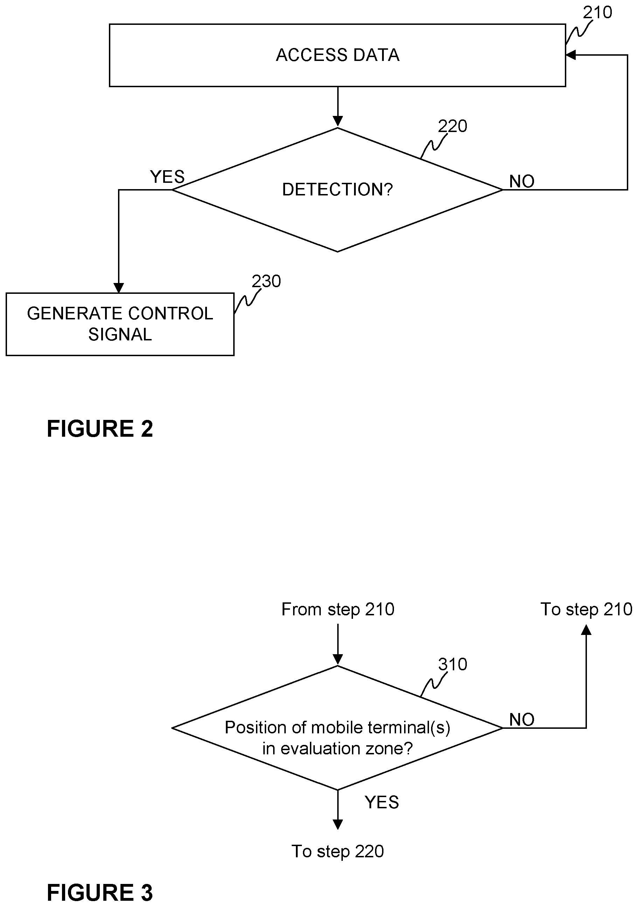

An example of the method in accordance with at least some embodiments of the invention is schematically illustrated in Figure 2 wherein the method is depicted from the computing system 122 point of view. First, in the step referred with 210 in Figure 2 the computing system 122 is configured to access data descriptive of a behavior of a number of mobile terminals 150 served by the first mobile communication network MNO A. The access to the data may be performed in manners as described in the foregoing description. In other words, the computing system 122 accesses 210, such as receives, data that describes the behavior of one or more mobile terminals 150. The data descriptive of a mobile terminal 150 is advantageously provided with data identifying the subscription implemented in the respective mobile terminal 150 so as to evaluate the behavior on a subscriber basis. The data descriptive of the behavior of the mobile terminal 150 may correspond to position data of the mobile terminal 150 defining the route denoted with R in Figure 1. In other words, the data descriptive of the behavior of the mobile terminal 150 may e.g. consist of a number of consecutive coordinates forming at least part of the position data defined the route R the mobile terminal 150 has roamed within a time window.

The data descriptive of the behavior of the number of mobile terminals 150 is analyzed by the computing system 122 and, thus, performs a detection 220 if there is a need for a handover with respect to at least one mobile terminal 150 under analysis. The analysis for the detection 220 may be performed by the computing system 122 in a manner that the data descriptive of the behavior of the mobile terminal 150, or at least part of it, is compared to reference data and the comparison generates the detection if such a conclusion may be made with a predefined accuracy. For example, a detection algorithm applied for the detection may be established so that it evaluates the accuracy of the comparison and in response to that the accuracy corresponds to a predefined probability that a positive detection on the need of the handover may be made, a detection is given. In accordance with another approach the computing system 122 may be configured to execute a machine-learning model trained to generate detection result based on data input to the model which detection result indicates if a need of a handover may be expected. In other words, the input data to the machine-learning model may be the data descriptive of the behavior of the mobile terminal, or at least a portion of it, and the machine-learning model generates the detection based on the input data in accordance with how the machine-learning model is trained to. The machine-learning model may e.g. be trained to perform a classification task on the basis of the input data to conclude if there is a need for preparing for a handover or if there is no need for preparing for the handover.

As derivable from Figure 2 in case no detection 220 of an expected need of the handover is made, the computing system 122 may continue accessing the data and evaluating the situation. Alternatively, the computing system 122 may be configured to cancel the monitoring at least for a predefined period of time.

On the other hand, if the detection 220 generates an outcome that is indicative of an expected need of a handover, the computing system 122 is configured generate 230 a control signal to a control entity 126 of the first mobile communication network MNO A to request triggering of a handover of the mobile terminal 150 whose behavior is detected to be indicative on the expected need of a handover from the first mobile communication network MNO A to the second mobile communication network MNO B. The control entity 126 of the first communication network MNO A may be a Mobility Management Entity (MME) in case the first mobile communication network MNO A is a Long Term Evolution (LTE) network. Naturally other network entities belonging to the first mobile communication network MNO A, and especially to the core network 120 of the first mobile communication network MNO A, may be impacted by the generated control signal in order to prepare for the handover. The other entities may be controlled by the control entity 126 of the first mobile communication network MNO A in response to the receipt of the control signal from the computing system 122. The control signal generated 230 by the computing system 122 to the control entity 126 of the first mobile communication network MNO A may advantageously carry data identifying the subscription, and, thus, the mobile terminal 150, for which the handover is to be prepared for. Additionally, since the computing system 122 may determine, based on the analysis, that the mobile terminal 150 is to be handovered to the second mobile communication network MNO B in order to provide communication service to the mobile terminal 150 in its future route, the computing system 122 may indicate to the control entity 126 of the first mobile communication network MNO A, that the handover type is so-called inter network handover which is to performed through control entities 126, 161 of the involved mobile communication networks MNO A, MNO B. In other words, the control entity 126 of the first mobile communication network MNO A may initiate signaling with a control entity 161 of the second mobile communication network MNO B for initiating the handover process.

In accordance with an embodiment of the invention the computing system 122 may also be configured to generate a control signal comprising data causing the control entity 126 of the first mobile communication network MNO A to inform an entity in a radio access network 110 of the first mobile communication network MNO A on at least one entity in a radio access network 110 of the second mobile communication network MNO B over a communication channel arranged between the entities. This may refer to an arrangement in which the computing system 122 is configured to inform the entity in the first radio access network 110 on the at least one entity in the second radio access network 170 that is selected to provide the communication service at the radio access network level to the mobile terminal 150 at the handover phase. Here, the entity in the first radio access network 110 and the at least one entity in the second radio access network 170 may be base stations (cf. g/e NodeBs) in the respective networks. Alternatively or in addition, the entities may be controllers of the base stations in the respective radio access networks.

According to some further embodiments the computing system 122 may further be configured to generate a control signal to the mobile terminal 150 to control at least one service executed by the mobile terminal 150, or for the mobile terminal 150, in a context of the handover. The at least one service may refer to a service provided to the mobile terminal 150 by the communication network wherein the mobile terminal 150 may e.g. execute an application for the service. The controlling of the at least one service may be required in order to manage the handover process in an appropriate manner, e.g. so that a user experience is maintained at a satisfactory level. As a non-limiting example, the computing system 122 may control the at least one service by enabling/disabling one or more services available for the mobile terminal 150 during the time window the handover process takes place. For example, a use of IP Multimedia Subsystem (IMS) Application Point Name (APN) service may be allowed, but Internet APN is blocked during the handover process. With such an arrangement the operators of the mobile communication networks may support seamless handover for an ongoing call (e.g. Voice over LTE call) over the border zone of the two mobile communication networks, but limit data traffic at the same time. Generally speaking the controlling of the services, i.e. enabling/disabling, in the described situation may be decided by the service provider and it may e.g. be dependent on the capability of the communication network win the area and/or on any other criteria. For example, the disabling, or blocking, of the service may be implemented with a case-by-case approach. For example, it is possible to arrange that the inter-RAT handover based on the present invention is only allowed to a certain group of subscribers, such as authorities. Alternatively or in addition, the same may be arranged dependently on the networks being involved in the described operation.

In accordance with some embodiments of the invention required computing resources may be optimized by defining a zone within the mobile communication network the invention is implemented. In other words, the evaluation of the expected need of the handover is arranged to be performed with data descriptive of the behavior of the mobile terminal 150 that is obtained from the zone. Such a zone called as an evaluation area 130 is schematically illustrated in Figure 1. As said, since the evaluation with respect to the need of the handover is performed on the data descriptive of the behavior of the mobile terminal 150 in the evaluation area 130, the required computing resources of the computing system 122 for implementing the method may be reduced since the amount of the data is optimized.

In accordance with the some embodiments of the invention the evaluation area 130 may be taken into account with a further step of the method as schematically illustrated in Figure 3. The further step denoted with 310 refers to a computer-implemented process in which the data descriptive of a behavior of a number of mobile terminals accessed by the computing system 122 is evaluated in terms of a position of the mobile terminal 150. In other words, the computing system 122 is provided with position data defining the evaluation area 130 e.g. by applying a predefined coordinate system and the computing system 122 is configured to determine 310 if at least one of the mobile terminals 150 served by the first mobile communication network MNO A resides in the evaluation area 130 and shall be evaluated with respect to the expected need of the handover. If this is not the case the computing system 122 keeps accessing the data and performing the step 310 to the accessed data. On the other hand, if there are one or more mobile terminals 150 that are determined to reside in the evaluation area 130, the computing system 122 may proceed with an operation of the step 220 of Figure 2 as described with respect to those mobile terminals 220 determined to reside in the evaluation area 130.

As mentioned in the foregoing description the data applied in performing the detection 220 as the reference against the data descriptive of the current behavior of the mobile terminal 150 over a predefined time window may be subscriber-specific or representing a plurality of mobile terminals 150. Hence, in case the data is subscriber-specific it refers to an approach according to an embodiment of the invention in which the reference data is formed from history data descriptive of the behavior of the mobile terminal 150 earlier and it may comprise an indication if the earlier behavior led to a handover or not. The reference data shall also be understood as the data used for training the machine-learning model for performing the task as described. On the other hand, if the reference data used as the basis for the evaluation and detection 220 is formed based on a behavior of the plurality of the mobile terminals 150 historically preferably comprising with the information on the handover, the method according to the invention is based on a statistical approach. Hence, it is possible to arrange that the data descriptive of the behaviors of the plurality of mobile terminals 150 is prepared e.g. through a statistical analysis and in that manner the reference data is generated. On the other hand, if the machine-learning model is applied in the solution according to the invention, the training may be based on the behavioral data of the plurality of the mobile terminals 150. Both approaches, i.e. the utilization of the dedicated data of the mobile terminal 150 in question or utilization of the data of a plurality of mobile terminals 150, are applicable as such as already discussed.

As already brought out in the foregoing description the data descriptive of the behavior of the mobile terminal 150 may comprise at least information on a number of positions of the mobile terminal 150. Thus, a plurality of position values may define a route the mobile terminal 150 travels over a period of time. Thus, the data descriptive of the behavior of the mobile terminal 150 may comprise applicable geographical data, such as the position as mentioned, but also velocity and information on the direction of the movement. Thus, the geographical data is preferably linked to the time information e.g. in order to determine the velocity if applied to.

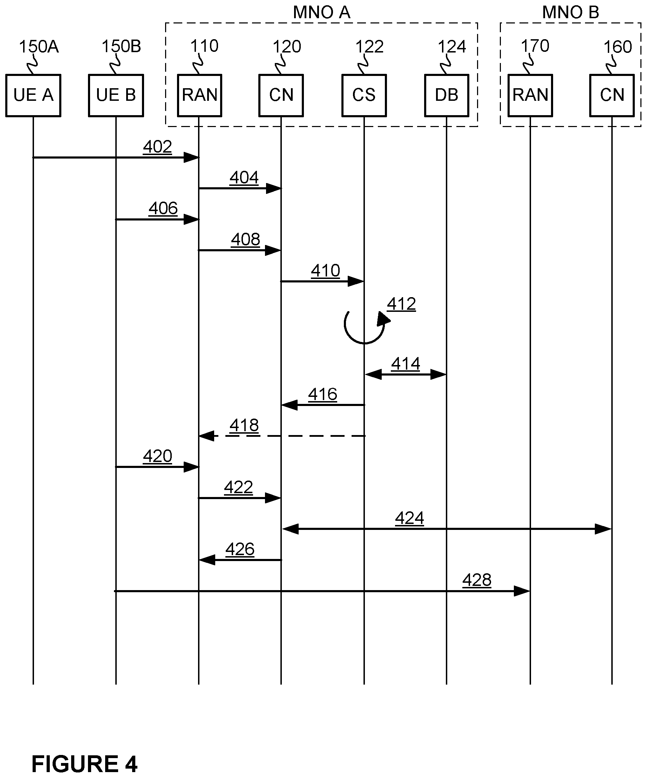

Figure 4 illustrates schematically an example of a signal flow between entities in a communication environment into which the present invention is implemented to. The signal flow is shown in a context that there are two mobile term inals referred with 150A, 150B in Figure 4 under interest wherein the starting point is that the mobile terminals 150A, 150B are served by a first mobile communication network MNO A. The signals 402 and 406 from the respective mobile terminals 150A, 150B refer to a provision of data descriptive of the behaviors of the mobile terminals 150A, 150B. The data is delivered over the radio access network 110 of the first mobile communication network MNO A to the core network 120 (cf. EPC or 5GC) (signals 404 and 408 in Figure 4) wherein the control entity 126 may be configured to detect from the signaling, e.g. from the signaling type or from any other information, that the data is intended to the computing system 122 configured to implement the method according to at least some aspects of the present invention. Thus, the control entity 126 harnessed to the task in the core network 120 is configured to deliver the data to the computing system 122 (signal 410) and to make the data accessible 210 to the computing system 122. Next, the computing system 122 is configured to perform the analysis (arrow 412) in order to determine if there is an expected need for a handover and the analysis may comprise inquiry to a database 124 (signal 414) arranged to store data related to the analysis. Such data may comprise the information as already discussed herein but it may also comprise other subscriber related data, such as if the subscription in question is at all allowed to be handovered to another mobile communication network. In the example as shown in Figure 4 it may e.g. be detected that the mobile terminal 150A moves in an area, e.g. within the evaluation area 130, so that it may be derived that the mobile terminal 150A performs the same activities as seen earlier. This may e.g. refer to a situation that the owner of the mobile terminal 150A lives in the area and there is no any sign that the mobile terminal 150A is heading towards a coverage area of the second mobile communication network MNO B in such a way that a preparation for a handover is to be initiated. On the other hand, the analysis with respect to the data descriptive of the behavior of the second mobile terminal 150B may show with a required accuracy that the mobile terminal 150B is most likely moving to the coverage area of the second mobile communication network MNO B and, thus, the preparation for the handover is to be initiated. For example, it may be detected that the mobile terminal 150B is traveling with a speed of 100 km/h on a highway that takes over the border of the two mobile communication networks MNO A, MNO B based on which it may be assumed that the preparation for the handover is necessary. Thus, the computing system 122 may be configured to generate 230 a control signal 416 to the control entity 126 of the first mobile communication network MNO A to request triggering of a handover of the mobile terminal 150B. Moreover, the control signal 416 may comprise data causing the control entity of the first mobile communication network MNO A to inform an entity in a radio access network 110 of the first mobile communication network MNO A on at least one entity in a radio access network 170 of the second mobile communication network MNO B. Alternatively, the computing system 122 may be communicatively connected to the radio access network 110 of the first mobile communication network MNO A to inform the entity in the first radio access network 110 on the entity in the second radio access network 170. This approach is shown with signal 418 in Figure 3. In the non-limiting example the mobile terminal 150B is provided with a connection to the first mobile communication network MNO A, e.g. executing an active service connection, such as having an active voice call connection, at the described situation and upon arriving the border zone the mobile terminal 150B requests a handover from the serving cell (g/e NodeB) (signal 420) and as a result the radio access network informs the core network 120 (signal 422) on the situation at the same time indicating the mobile terminal 150B on an allowance of the handover. The core networks 120, 160, i.e. the control entities 126, 161 therein, agree on the inter-network handover (arrow 424) and as a result the core network 120 of the first mobile communication network MNO A informs (signal 426) the involved entity, or entities, in the radio access network 110, on the allowance of handovering the mobile terminal 150B to the second mobile communication network MNO B. As a result the mobile terminal 150B is transferred to be served by the second radio access network 170 of the second mobile communication network MNO B.

As described herein the evaluation of one or more mobile terminals 150, 150A, 150B in accordance with the method may lead to a triggering of a handover of a mobile terminal 150, 150A, 150B between mobile communication networks MNO A, MNO B. The invention as described may in at least some embodiments be embedded to a standardized handover procedure. The standardized handover procedure in an inter-network handover situation may comprise a number of operations, which may e.g. comprise:
- Radio network quality measurements between eNodeB residing in a radio access network 110 of the first mobile communication network, MNO A, and the mobile terminal 150 are used to decide if a handover is needed to another cell. The target cell from a target network, i.e. the second mobile communication network, MNO B, is selected. The eNodeB residing in the second mobile communication network, MNO B, for the target cell is identified.
- The Source eNodeB in the source network, MNO A, sends a "Handover Required" message to the Source MME 126.
- The Source MME 126 relays Handover Request message to the Target MME 161.
- The Target MME 161 sends Handover Request message to the Target eNodeB.
- The Target eNodeB responds back to the Target MME 161 with a Handover Request Acknowledge message.
- The Source MME 126 sends a Handover Command message to the Source eNodeB.
- A tunnel needs to be established between the Source and Target eNodeBs via the SGW.
- The Source eNodeB sends a handover command to the mobile terminal 150.
- After the mobile terminal 150 has successfully synchronized to the target cell, it sends a Handover Confirm message to the Target eNodeB.
- The buffered downlink data is sent to the mobile terminal 150.
- The Target eNodeB sends a Handover Notify message to the Target MME 161.

The aspects relating to the handover process are described in the context that the control entities 126, 161 are MMEs and the base stations in the radio access networks are eNodeBs. The other entities mentioned above are also from a communication network implemented in accordance with LTE specifications. In view of above, the method, and the operation of the computing system 122, in accordance with the present invention may be embedded to the above described standardized handover procedure so that it is executed in response to a detection that the radio network quality measurements between the eNodeB residing in a radio access network 110 of the first mobile communication network, MNO A, and the mobile terminal 150 indicate that a handover to another cell is required. Thus, the method according to the present invention is executed and if it causes a positive outcome, i.e. that the control signal to the control entity is generated 230, a continuation of the standardized handover procedure is triggered, i.e. it is allowed to continue. Hence, the present invention may be considered as an add-on to the standardized handover procedure that increases an accuracy in a decision-making with respect to the handover, and, thus, improves resource usage of the communication networks.

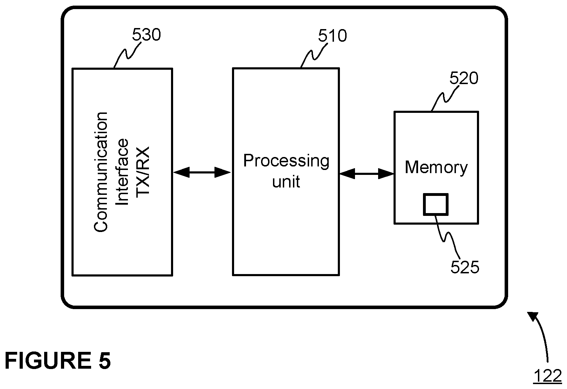

The computing system 122 as described herein may be implemented with one or more apparatuses suitable for practicing the embodiments as described. A non-limiting example of an apparatus suitable to executing at least part of the method as a single device is schematically illustrated in Figure 5. In other words, the apparatus may be configured to implement at least part of the method as described. The execution of the respective method, or at least some portions of them, may be achieved by arranging a processing unit 510 comprising at least one processor to execute at least some portion of computer program code 525 stored in at least one memory 520 causing the at least one processor, and, thus, the apparatus to implement at least part of the method steps as described in order to execute the operation as described. In other words, the processing unit 510 may be arranged to access the memory 520 and to retrieve and to store any information therefrom and thereto. Moreover, the processing unit 510 may be configured to control a communication through one or more communication interfaces 530 for accessing the other entities being involved in the operation, such as the data storage 124 and the nodes/devices of the communication network(s), such as the control entities of the respective networks, in a manner as described in the description herein. Hence, the communication interface 530 may be arranged to implement, possibly under control of the processing unit 510, a number of communication protocols, such as an IP or any other communication protocol, for communicating with one or more entities to receive input and to output data as described. The term communication interface 530 shall be understood in a broad manner comprising necessary hardware and software elements for implementing the communication techniques. Further, the apparatus in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone, camera and so on. In some implementation of the apparatus at least some of the input/output devices may be external to the apparatus and coupled to it either wirelessly or in a wired manner. For sake of clarity, the processing unit 510 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 520, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

In the foregoing description it is provided a non-limiting example in which the computing system 122 is implemented as a dedicated apparatus for the task. However, the computing system 122 may also be executed by an entity also configured to perform other tasks. Such an entity may e.g. be the MME and if the computing system 122 is integrated therein, the delivery of the described signals may be an internal operation of the respective entity.

As derivable from above, some aspects of the present invention may relate to a computer program which, when executed by at least one processor, cause an apparatus to perform at least some portions of the method as described. For example, the computer program may comprise at least one computer-readable non-transitory medium having the computer program code 525 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 525 may comprise a proprietary application, such as computer program code for generating the data record in the manner as described.

The computer program code 525 may also be considered to include the definitions and instructions of an execution of the application of the data record in a further use.

The specific examples provided in the description given above should not be construed as limiting the applicability and/or the interpretation of the appended claims. Lists and groups of examples provided in the description given above are not exhaustive unless otherwise explicitly stated.

## Claims

1. A method for triggering a handover of a mobile terminal (150, 150A, 150B) from a first mobile communication network (MNO A) to a second mobile communication network (MNO B), the first mobile communication network (MNO A) is providing a connection to the mobile terminal (150, 150A, 150B), the method, performed by a computing system (122), comprises:
accessing (210) data descriptive of a behavior of a number of mobile terminals (150, 150A, 150B) served by the first mobile communication network (MNO A),
detecting (220) a mobile terminal (150, 150A, 150B) among the number of mobile terminals (150, 150A, 150B) whose behavior, based on an analysis of the data descriptive of the behavior of the number of mobile terminals (150, 150A, 150B), is indicative of an expected need of a handover,
generating (230) a control signal to a control entity (126) of the first mobile communication network (MNO A) to request triggering of a handover of the mobile terminal (150, 150A, 150B) whose behavior is detected to be indicative of the expected need of a handover from the first mobile communication network (MNO A) to the second mobile communication network (MNO B).

2. The method according to claim 1, the method further comprising:
generating a control signal further comprising data causing the control entity (126) of the first mobile communication network (MNO A) to inform an entity in a radio access network of the first mobile communication network (MNO A) on at least one entity in a radio access network (170) of the second mobile communication network (MNO B).

3. The method according to any of the preceding claims, the method further comprising:
generating, in response to the detection that the behavior of the mobile terminal (150, 150A, 150B) is indicative of an expected need of a handover, a control signal to the mobile terminal (150, 150A, 150B) to control at least one service executed by the mobile terminal (150, 150A, 150B) in a context of the handover.

4. The method according to any of the preceding claims, wherein the detection (220) is performed with respect to the number of mobile terminals (150, 150A, 150B) determined (310) to reside in a predefined evaluation area (130).

5. The method according to any of the preceding claims, wherein the detection (220) is performed by comparing the data descriptive of the behavior of the mobile terminal (150) to a history data descriptive of the behavior of the mobile terminal (150).

6. The method according to any of the preceding claims 1 to 4, wherein the detection (220) is performed by inputting the data descriptive of the behavior of the mobile terminal (150) to a machine-learning model trained to detect the expected need of the handover.

7. The method according to any of the preceding claims 1 to 6, wherein the step of accessing (210) the data descriptive of the behavior of the mobile terminal (150, 150A, 150B) served by the first mobile communication network (MNO A) is initiated in response to a detection that the handover is required based on a radio network quality measurement.

8. A computing system (122) for triggering a handover of a mobile terminal (150, 150A, 150B) from a first mobile communication network (MNO A) to a second mobile communication network (MNO B), the first mobile communication network (MNO A) is providing a connection to the mobile terminal (150, 150A, 150B), the computing system (122) is configured to:
access (210) data descriptive of a behavior of a number of mobile terminals (150, 150A, 150B) served by the first mobile communication network (MNO A),
detect (220) a mobile terminal (150, 150A, 150B) among the number of mobile terminals (150, 150A, 150B) whose behavior, based on an analysis of the data descriptive of the behavior of the number of mobile terminals (150, 150A, 150B), is indicative of an expected need of a handover,
generate (230) a control signal to a control entity (126) of the first mobile communication network (MNO A) to request triggering of a handover of the mobile terminal (150, 150A, 150B) whose behavior is detected to be indicative of the expected need of a handover from the first mobile communication network (MNO A) to the second mobile communication network (MNO B).

9. The computing system (122) according to claim 8, the computing system (122) further configured to:
generate a control signal further comprising data causing the control entity (126) of the first mobile communication network (MNO A) to inform an entity in a radio access network of the first mobile communication network (MNO A) on at least one entity in a radio access network (170) of the second mobile communication network (MNO B).

10. The computing system (122) according to claim 8 or claim 9, the computing system (122) further configured to:
generate, in response to the detection that the behavior of the mobile terminal (150, 150A, 150B) is indicative of an expected need of a handover, a control signal to the mobile terminal (150, 150A, 150B) to control at least one service executed by the mobile terminal (150, 150A, 150B) in a context of the handover.

11. The computing system (122) according to any of the preceding claims 8 to 10, wherein the computing system (122) is configured to perform the detection (220) with respect to the number of mobile terminals (150, 150A, 150B) determined (310) to reside in a predefined evaluation area (130).

12. The computing system (122) according to any of the preceding claims 8 to 11, wherein the computing system (122) is configured to perform the detection (220) by comparing the data descriptive of the behavior of the mobile terminal (150) to a history data descriptive of the behavior of the mobile terminal (150).

13. The computing system (122) according to any of the preceding claims 8 to 11, wherein the computing system (122) is configured to perform the detection (220) by inputting the data descriptive of the behavior of the mobile terminal (150) to a machine-learning model trained to detect the expected need of the handover.

14. The computing system (122) according to any of the preceding claims 8 to 13, wherein the computing system (122) is configured to initiate the step of accessing (210) the data descriptive of the behavior of the mobile terminal (150, 150A, 150B) served by the first mobile communication network (MNO A) in response to a detection that the handover is required based on a radio network quality measurement.

15. A computer program comprising instructions to cause the computing system of claim 8 to execute the steps of the method of claim 1.

16. A communication system, comprising:
a first mobile communication network (MNO A),
a second mobile communication network (MNO B),
a mobile terminal (150, 150A, 150B), and
a computing system according to any of the preceding claims 8 to 14.
